# EUROPEAN PATENT APPLICATION

(11) **EP 3 340 020 A1**
(43) Date of publication of application: **27.06.2018**
(21) Application number: 16206680.7
(22) Date of filing: 23.12.2016
(51) Int. Cl.: G06F 3/041, G06F 3/044

(54) **TOUCH SCREEN SYSTEM AND CONVERTING METHOD THEREOF**

(71) Applicant: PowerView Display Corporation, Zhubei City, Hsinchu County 30265 (TW)
(72) Inventor: Chien, Cheng-Pang, 30265 Zhubei City, Hsinchu County (TW)
(74) Representative: Krauns, Christian

(57) **Abstract**

A touch screen system is provided. The touch screen system includes a capacitive touch panel, a system circuit board and a conversion circuit. The capacitive touch panel provides a touch point position information. A resistive panel driver is installed on the system circuit board. The conversion circuit is connected with the capacitive touch panel and the resistive panel driver. The touch point position information is converted into a horizontal analog voltage and a vertical analog voltage by the conversion circuit, and the horizontal analog voltage and the vertical analog voltage are transmitted to the resistive panel driver by the conversion circuit.

## Description

### FIELD OF THE INVENTION

The present invention relates to a display system, and more particularly to a touch screen system and a converting method thereof.

### BACKGROUND OF THE INVENTION

Generally, a touch screen is an input device that allows users to easily input data and click to make selection. Nowadays, most electronic devices such as personal digital assistants (PDAs), tablet computers or smart phones have touch panels for allowing users to input data and make selection.

The touch panels of the touch screen systems are usually classified into several types, including resistive touch panels, capacitive touch panels, surface acoustic wave touch panels and optics touch panels. Hereinafter, the operating principles of a resistive touch screen system and a capacitive touch screen system will be described.

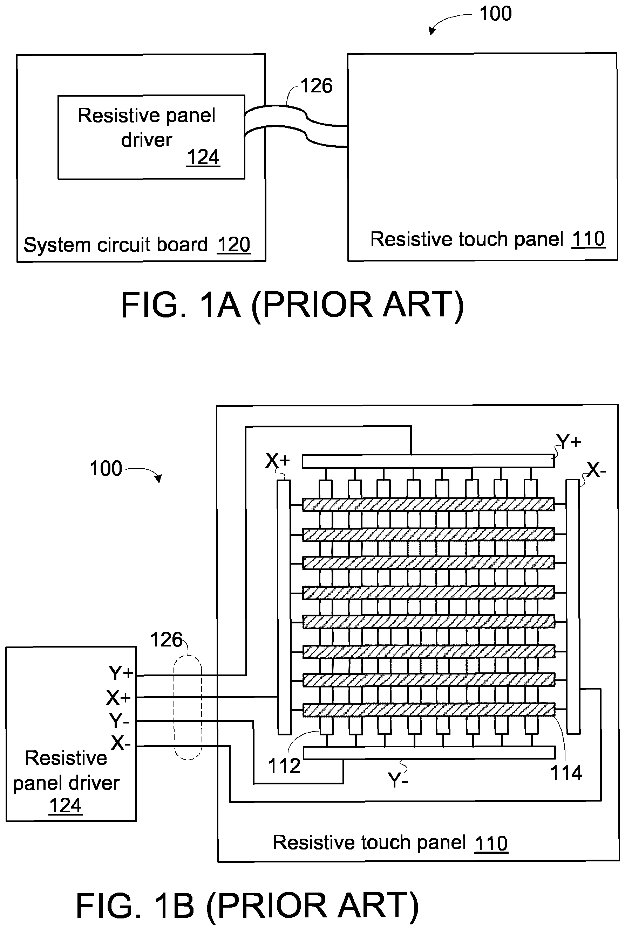

FIG. 1A schematically illustrates the architecture of a resistive touch screen system. As shown in FIG. 1A, the resistive touch screen system 100 comprises a resistive touch panel 110 and a system circuit board 120. A resistive panel driver 124 is installed on the system circuit board 120. The resistive panel driver 124 is connected with the resistive touch panel 110 through a flexible cable or wires 126. In addition, a processor, a graphic circuit, a peripheral circuit or any other appropriate circuit is installed on the system circuit board 120.

The resistive panel driver 124 issues a scan signal to the resistive touch panel 110. When a finger of the user touches the resistive touch panel 110 to generate a touch point on the resistive touch panel 110, the resistive touch panel 110 generates an analog voltage according to the action of the scan signal. The analog signal is transmitted to the resistive panel driver 124 through the flexible cable or wires 126.

After the analog signal is received, the resistive panel driver 124 calculates the position of the touch point. Moreover, the information about the position of the touch point is transmitted to the rear-end circuit such as the processor, and the subsequent processing operation is performed accordingly.

FIG. 1B is a schematic circuit diagram of the resistive touch screen system of FIG. 1A. As shown in FIG. 1B, the resistive touch screen system 100 comprises the resistive touch panel 110 and the resistive panel driver 124. The resistive panel driver 124 is in communication with the resistive touch panel 110 through the flexible cable or wires 126. The resistive panel driver 124 is installed on a system circuit board (not shown). Hereinafter, a four-wire resistive touch panel will be taken as an example for illustration. The operating principles of the five-wire resistive touch panel or the eight-wire resistive touch panel are similar.

As shown in FIG. 1B, four electrodes are located at four edges of the resistive touch panel 110. The four electrodes includes a negative Y electrode (Y-), a positive Y electrode (Y+), a negative X electrode (X-) and a positive X electrode (X+). Moreover, plural indium tin oxide (ITO) strips 112 are arranged along a vertical direction. Two ends of each ITO strips 112 are connected with the negative Y electrode (Y-) and the positive Y electrode (Y+), respectively. In addition, plural ITO strips 114 are arranged along a horizontal direction. Two ends of each ITO strips 114 are connected with the negative X electrode (X-) and the positive X electrode (X+), respectively. All of the ITO strips 112 and 114 may be considered as resistors. The resistive panel driver 124 is connected with the negative Y electrode (Y-), the positive Y electrode (Y+), the negative X electrode (X-) and the positive X electrode (X+) through a Y- wire, a Y+ wire, an X- wire and an X+ wire of the flexible cable or wires 126, respectively.

In case that the touch point is not generated, the ITO strips 112 along the vertical direction and the ITO strips 114 along the horizontal direction are not contacted with each other.

When the touch point is generated, one ITO strip 112 and one ITO strip 114 corresponding to the touch point are contacted with each other. Consequently, the position of the touch point can be calculated by the resistive panel driver 124.

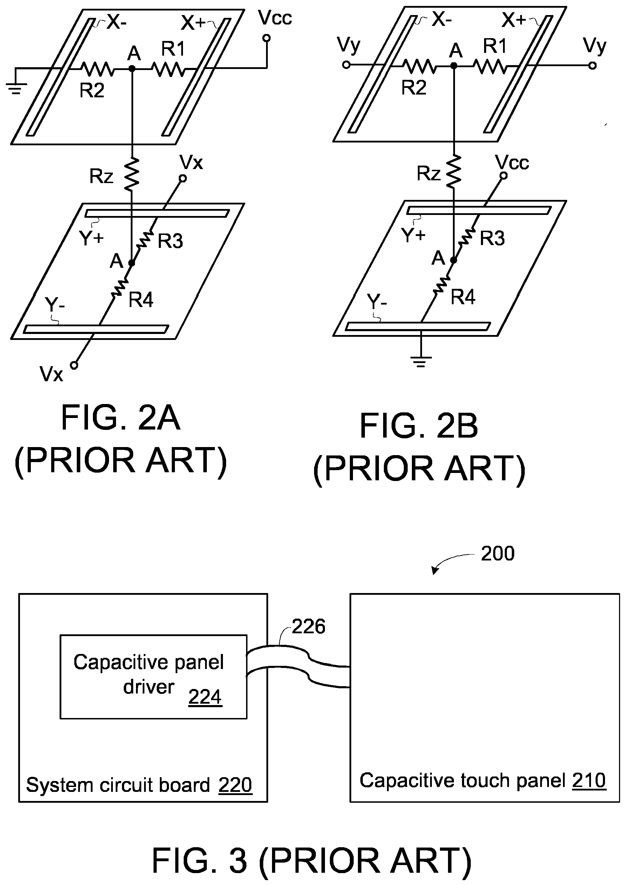

FIG. 2A is a schematic circuit diagram illustrating an approach of calculating the horizontal position of the touch point by the resistive touch screen system. As shown in FIG. 2A, the touch point A is generated when the ITO strip along the vertical direction and the ITO strip along the horizontal direction are contacted with each other. Meanwhile, a contact resistance between the ITO strip along the vertical direction and the ITO strip along the horizontal direction is Rz.

While the resistive panel driver 124 performs a scan action along the horizontal direction (i.e., the X direction), the resistive panel driver 124 provides a power supply voltage Vcc and a ground voltage as a driving signal to the positive X electrode (X+) and the negative X electrode (X-) for performing the scan action along the horizontal direction. That is, the power supply voltage Vcc is connected with the positive X electrode (X+), the ground voltage is connected with the negative X electrode (X-), both positive and negative Y electrodes (Y+,Y-) are used as output terminals to receive a horizontal analog voltage Vx.

Obviously, the horizontal analog voltage Vx at both positive and negative Y electrodes (Y+,Y-) can be expressed as: Vx=R2×Vcc/(R1+R2). As shown in FIG. 2A, the horizontal analog voltage Vx is determined according to the position of the touch point A. As the touch point A is closer to the right side, the horizontal analog voltage Vx is higher. Whereas, as the touch point A is closer to the left side, the horizontal analog voltage Vx is lower. Consequently, the horizontal analog voltage Vx can be converted into the horizontal position of the touch point A by the resistive panel driver 124. For example, the resistive panel driver 124 may perform an analog-to-digital conversion of the horizontal analog voltage Vx in order to acquire the horizontal position of the touch point A.

FIG. 2B is a schematic circuit diagram illustrating an approach of calculating the vertical position of the touch point by the resistive touch screen system.

While the resistive panel driver 124 performs a scan action along the vertical direction (i.e., the Y direction), the resistive panel driver 124 provides a power supply voltage Vcc and a ground voltage as a driving signal to the positive Y electrode (Y+) and the negative Y electrode (Y-) for performing the scan action along the vertical direction. That is, the power supply voltage Vcc is connected with the positive Y electrode (Y+), the ground voltage is connected with the negative Y electrode (Y-), both positive and negative X electrodes (X+,X-) are used as output terminals to receive a vertical analog voltage Vy.

Obviously, the vertical analog voltage Vy at both positive and negative X electrode (X+,X-) can be expressed as: Vy=R4×Vcc/(R3+R4). As shown in FIG. 2B, the vertical analog voltage Vy is determined according to the position of the touch point A. As the touch point A is closer to the top side, the vertical analog voltage Vy is higher. Whereas, as the touch point A is closer to the left side, the vertical analog voltage Vy is lower. Consequently, the vertical analog voltage Vy can be converted into the vertical position of the touch point A by the resistive panel driver 124. For example, the resistive panel driver 124 may perform an analog-to-digital conversion of the vertical analog voltage Vy in order to acquire the vertical position of the touch point A.

As mentioned above, the resistive panel driver 124 performs the scan action along the horizontal direction (i.e., the X direction) to calculate the horizontal position of the touch point according to the horizontal analog voltage Vx, and the resistive panel driver 124 performs a scan action along the vertical direction (i.e., the Y direction) to calculate the vertical position of the touch point according to the vertical analog voltage Vy. After the horizontal position of the touch point and the vertical position of the touch point are combined together, the position of the touch point on the resistive touch panel 110 is realized.

FIG. 3 schematically illustrates the architecture of a capacitive touch screen system. As shown in FIG. 3, the capacitive touch screen system 200 comprises a capacitive touch panel 210 and a system circuit board 220. A capacitive panel driver 224 is build-in on the capacitive panel 210 or installed on the system circuit board 220. The capacitive panel driver 224 is connected with the capacitive touch panel 210 through a flexible cable or wires 226. In addition, a processor, a graphic circuit, a peripheral circuit or any other appropriate circuit is installed on the system circuit board 220.

When a finger of the user touches the capacitive touch panel 210 to generate a touch point on the capacitive touch panel 210, the capacitive touch panel driver 224 detects the capacitance change of the touch point and realizes the position of the touch point. Then, the capacitive touch panel driver 224 generates a digital signal indicating the information about the position of the touch point (e.g., the coordinate of the touch point) to the capacitive panel driver 224 through the flexible cable or wires 226. After the digital signal is received by the capacitive panel driver 224, the information about the position of the touch point is transmitted to the rear-end circuit such as the processor, and the subsequent processing operation is performed accordingly. Generally, the touch point position information, which is generated by the capacitive touch panel 210 and transmitted to the capacitive panel driver 224, is digital information.

As mentioned above, the architecture of the resistive touch screen system 100 and the architecture of the capacitive touch screen system 200 are similar. However, the operating principles and methods of detecting the touch point are distinguished. For example, if the resistive panel driver 124 is connected with the capacitive touch panel 210 or the capacitive panel driver 224 is connected with the resistive touch panel 110, the touch screen system cannot be normally operated.

That is, while designing an electronic device, the manufacturer of the electronic device has to determine which of the resistive touch screen system 100 and the capacitive touch screen system 200 is used.

In case that the manufacturer of the electronic device decides to use the resistive touch screen system 100, the resistive panel driver 124 and the resistive touch panel 110 are purchased and installed in the electronic device. In case that the manufacturer of the electronic device decides to use the capacitive touch screen system 200, the capacitive panel driver 224 and the capacitive touch panel 210 are purchased and installed in the electronic device.

### SUMMARY OF THE INVENTION

An embodiment of the present invention provides a touch screen system. The touch screen system includes a capacitive touch panel, a system circuit board and a conversion circuit. The capacitive touch panel provides a touch point position information. A resistive panel driver is installed on the system circuit board. The conversion circuit is connected with the capacitive touch panel and the resistive panel driver. The touch point position information is converted into a horizontal analog voltage and a vertical analog voltage by the conversion circuit, and the horizontal analog voltage and the vertical analog voltage are transmitted to the resistive panel driver by the conversion circuit.

Another embodiment of the present invention provides a converting method for a touch screen system including a capacitive touch panel and a resistive panel driver. The converting method includes the following steps. Firstly, a touch point position information from the capacitive touch panel is received. when the resistive panel driver performs a scan action along a first direction, a first position information of the touch point position information is converted into a first analog voltage and the first analog voltage is transmitted to the resistive panel driver. When the resistive panel driver performs a scan action along a second direction, a second position information of the touch point position information is converted into a second analog voltage and the second analog voltage is transmitted to the resistive panel driver.

Numerous objects, features and advantages of the present invention will be readily apparent upon a reading of the following detailed description of embodiments of the present invention when taken in conjunction with the accompanying drawings. However, the drawings employed herein are for the purpose of descriptions and should not be regarded as limiting.

### BRIEF DESCRIPTION OF THE DRAWINGS

The above objects and advantages of the present invention will become more readily apparent to those ordinarily skilled in the art after reviewing the following detailed description and accompanying drawings, in which:
FIG. 1A (prior art) schematically illustrates the architecture of a resistive touch screen system;
FIG. 1B (prior art) is a schematic circuit diagram of the resistive touch screen system of FIG. 1A;
FIG. 2A (prior art) is a schematic circuit diagram illustrating an approach of calculating the horizontal position of the touch point by the resistive touch screen system;
FIG. 2B (prior art) is a schematic circuit diagram illustrating an approach of calculating the vertical position of the touch point by the resistive touch screen system;
FIG. 3 (prior art) schematically illustrates the architecture of a capacitive touch screen system;
FIG. 4 schematically illustrates the architecture of a touch screen system according to an embodiment of the present invention;
FIG. 5 is a schematic circuit diagram illustrating the conversion circuit of the touch screen system according to the embodiment of the present invention; and
FIG. 6 is a flowchart illustrating a converting method for a touch screen system according to an embodiment of the present invention.

### DETAILED DESCRIPTION OF PREFERRED EMBODIMENTS

Nowadays, most of the industrial electronic devices such as machine monitoring instruments, automated teller machines, inventory management machines or medical monitoring instruments employ the resistive touch screen system.

After the electronic device is produced and before the industrial electronic device leaves the factory, the electronic device has to undergo a series of complex product verification processes. After the electronic device passes the test of the product verification processes, the manufacturer will not modify the hardware circuit of the electronic device.

For example, the resistive touch screen system of the electronic device is not changed to the capacitive touch screen system. If the manufacturer intends to change the resistive touch screen system to the capacitive touch screen system, the resistive panel driver of the system circuit board has to be replaced by a capacitive panel driver and the firmware of the electronic device has to be modified. Before the electronic device leaves the factory, the complex product verification processes should be performed again. Even if the capacitive touch screen system has superior performance, the manufacturer of the electronic device will not install the capacitive touch screen system in the electronic device.

For solving the above drawbacks, the present invention provides a touch screen system and a converting method thereof. The touch screen system has a conversion circuit. By the conversion circuit, the touch point position information from a capacitive touch panel is converted into analog voltages. The analog voltages are transmitted to a resistive panel driver. According to the technology of the present invention, the resistive touch panel of the resistive touch screen system of the electronic device can be directly replaced by the capacitive touch panel. More especially, it is not necessary to modify the system circuit board and the firmware of the electronic device.

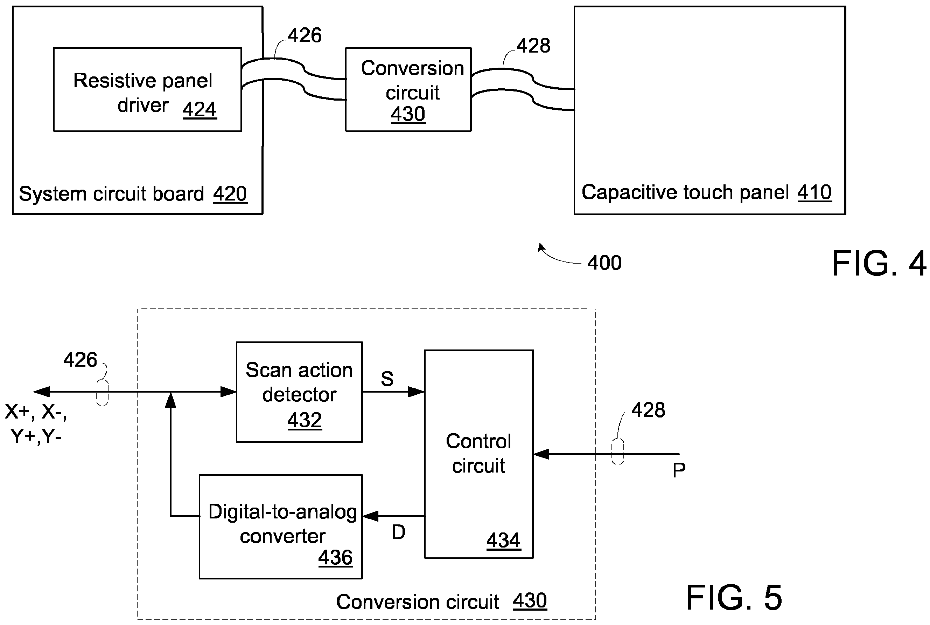

FIG. 4 schematically illustrates the architecture of a touch screen system according to an embodiment of the present invention. As shown in FIG. 4, the touch screen system 400 comprises a capacitive touch panel 410, a conversion circuit 430 and a system circuit board 420. Moreover, a resistive panel driver 424 is installed on the system circuit board 420. The resistive panel driver 424 is connected with a first end of the conversion circuit 430 through a first flexible cable or wires 426. Moreover, a second end of the conversion circuit 430 is connected with the capacitive touch panel 410 through a second flexible cable or wires 428. In addition, a processor, a graphic circuit, a peripheral circuit or any other appropriate circuit is installed on the system circuit board 420.

When a finger of the user touches the capacitive touch panel 410 to generate a touch point on the capacitive touch panel 410, the capacitive touch panel 410 generates a digital touch point position information (e.g., a touch point coordinate) to the conversion circuit 430. When a scan action along a horizontal direction (also referred as a horizontal scan action) is performed according to a scan signal from the resistive panel driver 424, the conversion circuit 430 generates a horizontal analog voltage Vx to the resistive panel driver 424 according to the digital touch point position information. Similarly, when a scan action along a vertical direction (also referred as a vertical scan action) is performed according to the scan signal from the resistive panel driver 424, the conversion circuit 430 generates a vertical analog voltage Vy to the resistive panel driver 424 according to the digital touch point position information.

After the horizontal analog voltage Vx and the vertical analog voltage Vy are sequentially received, the resistive panel driver 424 calculates the position of the touch point on the capacitive touch panel 410. Moreover, the touch point position information is transmitted to the rear-end circuit such as the processor, and the subsequent processing operation is performed accordingly.

FIG. 5 is a schematic circuit diagram illustrating the conversion circuit of the touch screen system according to the embodiment of the present invention. As shown in FIG. 5, the conversion circuit 430 comprises a scan action detector 432, a control circuit 434 and a digital-to-analog converter (DAC) 436.

The scan action detector 432 is connected with the resistive panel driver 424 through a Y- wire, a Y+ wire, an X- wire and an X+ wire of the flexible cable or wires 226. Moreover, the scan action detector 432 recognizes the scan action of the resistive panel driver 424 according to a driving signal from the Y- wire, the Y+ wire, the X- wire and the X+ wire.

For example, if the scan action detector 432 detects a power supply voltage Vcc from the X+ wire and a ground voltage from the X- wire, the scan action detector 432 judges that the resistive panel driver 424 performs the scan action along a horizontal direction (i.e., the X direction). Meanwhile, the scan action detector 432 generates a notification signal S to the control circuit 434 to notify the control circuit 434 that the resistive panel driver 424 performs the scan action along the horizontal direction (i.e., the X direction).

On the other hand, if the scan action detector 432 detects the power supply voltage Vcc from the Y+ wire and the ground voltage from the Y- wire, the scan action detector 432 judges that the resistive panel driver 424 performs the scan action along a vertical direction (i.e., the Y direction). Meanwhile, the scan action detector 432 generates a notification signal S to the control circuit 434 to notify the control circuit 434 that the resistive panel driver 424 performs the scan action along the vertical direction (i.e., the Y direction).

The control circuit 434 is connected with the scan action detector 432, the digital-to-analog converter 436 and the capacitive touch panel 410. When a finger of the user touches the capacitive touch panel 410 to generate a touch point on the capacitive touch panel 410, the capacitive touch panel 410 generates the digital touch point position information P (e.g., a touch point coordinate) to the control circuit 434.

After the notification signal S is received by the control circuit 434, the control circuit 434 generates a digital position signal D to the digital-to-analog converter 436. The digital position signal D is converted into an analog voltage by the digital-to-analog converter 436. The analog voltage is transmitted to the resistive panel driver 424.

For example, when the received notification signal S indicates that the resistive panel driver 424 performs the scan action along the horizontal direction (i.e., the X direction), the control circuit 434 acquires the horizontal position information (e.g., the horizontal position of the touch point coordinate) of the digital touch point position information P and generates the digital position signal D to the digital-to-analog converter 436. In addition, the horizontal analog voltage Vx from the digital-to-analog converter 436 is transmitted to the resistive panel driver 424 through the Y+ or Y- wire.

Moreover, when the received notification signal S indicates that the resistive panel driver 424 performs the scan action along the vertical direction (i.e., the Y direction), the control circuit 434 acquires the vertical position information (e.g., the vertical position of the touch point coordinate) of the digital touch point position information P and generates the digital position signal D to the digital-to-analog converter 436. In addition, the vertical analog voltage Vy from the digital-to-analog converter 436 is transmitted to the resistive panel driver 424 through the X+ or X- wire.

After the horizontal analog voltage Vx and the vertical analog voltage Vy are sequentially received, the resistive panel driver 424 calculates the position of the touch point according to the horizontal analog voltage Vx and the vertical analog voltage Vy. Moreover, the touch point position information is transmitted to the rear-end circuit such as the processor, and the subsequent processing operation is performed accordingly.

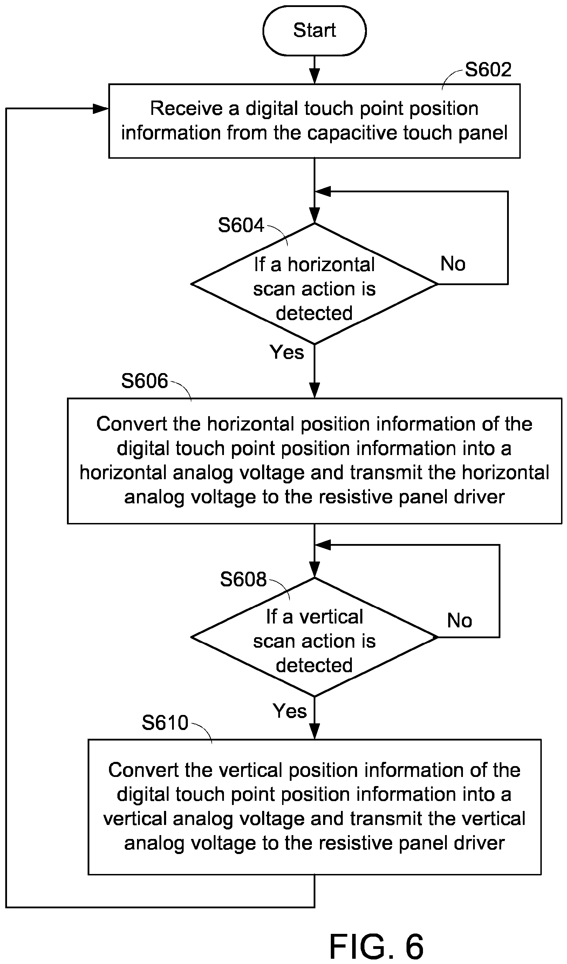

FIG. 6 is a flowchart illustrating a converting method for a touch screen system according to an embodiment of the present invention.

After the touch screen system 400 is enabled, the conversion circuit 430 receives a digital touch point position information P from the capacitive touch panel 410 (Step S602). If a scan action along a horizontal direction is detected (Step S604), the horizontal position information of the digital touch point position information P is converted into a horizontal analog voltage Vx and the horizontal analog voltage Vx is transmitted to the resistive panel driver 424 (Step S606). Then, if a scan action along a vertical direction is detected (Step S608), the vertical position information of the digital touch point position information P is converted into a vertical analog voltage Vy and the vertical analog voltage Vy is transmitted to the resistive panel driver 424 (Step S610). Then, the step S602 is repeatedly done to receive the next digital touch point position information.

After the horizontal analog voltage Vx and the vertical analog voltage Vy are sequentially received, the resistive panel driver 424 calculates the position of the touch point according to the horizontal analog voltage Vx and the vertical analog voltage Vy. Moreover, the touch point position information is transmitted to the rear-end circuit such as the processor, and the subsequent processing operation is performed accordingly.

From the above descriptions, the present invention provides the touch screen system and the converting method for the touch screen system. The conversion circuit 430 and the capacitive touch panel 410 are used to achieve the function of a resistive touch panel. According to the technology of the present invention, the resistive touch panel of the resistive touch screen system of the electronic device can be directly replaced by the capacitive touch panel. More especially, it is not necessary to modify the system circuit board and the firmware of the electronic device. Also, the electronic device with a replaced capacitive panel is not necessary to perform the complex product verification processes again.

In some embodiments, the conversion circuit 430 is integrated into the capacitive touch panel 410 or the system circuit board 420. It is noted that the sequence of performing the scan action is not restricted. For example, in another embodiment, the scan action along the horizontal direction is performed after the scan action along the vertical direction is performed.

While the invention has been described in terms of what is presently considered to be the most practical and preferred embodiments, it is to be understood that the invention needs not be limited to the disclosed embodiment. On the contrary, it is intended to cover various modifications and similar arrangements included within the spirit and scope of the appended claims which are to be accorded with the broadest interpretation so as to encompass all such modifications and similar structures.

## Claims

1. A touch screen system (400), comprising:
a capacitive touch panel (410) providing a touch point position information;
a system circuit board (420), wherein a resistive panel driver (424) is installed on the system circuit board (420); and
a conversion circuit (430) connected with the capacitive touch panel (410) and the resistive panel driver (424),
wherein the touch point position information is converted into a horizontal analog voltage and a vertical analog voltage by the conversion circuit (430), and the horizontal analog voltage and the vertical analog voltage are transmitted to the resistive panel driver by the conversion circuit (430).

2. The touch screen system as claimed in claim 1, wherein the conversion circuit detects a horizontal scan action or a vertical scan action of the resistive panel driver according to a driving signal from the resistive panel driver.

3. The touch screen system as claimed in claim 2, wherein when the conversion circuit detects the horizontal scan action according to the driving signal, the conversion circuit acquires a horizontal position information of the touch point position information and converts the horizontal position information into the horizontal analog voltage.

4. The touch screen system as claimed in claim 2 or 3, wherein when the conversion circuit detects the vertical scan action according to the driving signal, the conversion circuit acquires a vertical position information of the touch point position information and converts the vertical position information into the vertical analog voltage.

5. The touch screen system as claimed in anyone of the claims 2 to 4, wherein the conversion circuit comprises:
a scan action detector electrically connected with the resistive panel driver, wherein the scan action detector receives the driving signal from the resistive panel driver and generates a notification signal to indicate the horizontal scan action or the vertical scan action;
a control circuit connected with the capacitive touch panel and the scan action detector, and receiving the notification signal and the touch point position information, wherein when the notification signal indicates the horizontal scan action, the control circuit acquires a horizontal position information of the touch point position information as a position signal, wherein when the notification signal indicates the vertical scan action, the control circuit acquires a vertical position information of the touch point position information as the position signal; and
a digital-to-analog converter, wherein the position signal corresponding to the horizontal position information is converted into the horizontal analog voltage by the digital-to-analog converter, and the position signal corresponding to the vertical position information is converted into the vertical analog voltage by the digital-to-analog converter.

6. A converting method for a touch screen system including a capacitive touch panel and a resistive panel driver, the converting method comprising steps of:
receiving a touch point position information from the capacitive touch panel;
converting a first position information of the touch point position information into a first analog voltage and transmitting the first analog voltage to the resistive panel driver when the resistive panel driver performs a scan action along a first direction; and
converting a second position information of the touch point position information into a second analog voltage and transmitting the second analog voltage to the resistive panel driver when the resistive panel driver performs a scan action along a second direction.

7. The converting method as claimed in claim 6, wherein the first scan action is a scan action along a horizontal direction, the first position information is a horizontal position information, the first analog voltage is a horizontal analog voltage, the second scan action is a scan action along a vertical direction, the second position information is a vertical position information, and the second analog voltage is a vertical analog voltage.

8. The converting method as claimed in claim 6 or 7, wherein the first scan action is a scan action along a vertical direction, the first position information is a vertical position information, the first analog voltage is a vertical analog voltage, the second scan action is a scan action along a horizontal direction, the second position information is a horizontal position information, and the second analog voltage is a horizontal analog voltage.

9. The converting method as claimed in anyone of the claims 6 to 8, further comprising a step of detecting the first scan action or the second scan action according to a driving signal from the resistive panel driver.
